# EUROPÄISCHE PATENTANMELDUNG

(11) **EP 3 795 551 A1**
(43) Veröffentlichungstag der Anmeldung: **24.03.2021**
(21) Anmeldenummer: 20183642.6
(22) Anmeldetag: 23.09.2019
(51) Int. Cl.: C04B 20/00, C04B 20/06, C04B 20/10, C04B 26/26

(54) **BITUMENPRODUKT**

(62) Teilanmeldung aus: 19199058.9
(71) Anmelder: Binder + Co AG, 8200 Gleisdorf (AT)
(72) Erfinder: Kremer, Hartmut, 9241 Wernberg (AT)
(74) Vertreter: KLIMENT & HENHAPEL

(57) **Zusammenfassung**

Bitumenprodukt (1) umfassend Bitumen (3) sowie einen mineralischen Füllstoff. Um das Gewicht des Bitumenprodukts (1) zu reduzieren und dennoch ausreichende Abdichtwirkung zu erzielen, wird erfindungsgemäß vorgeschlagen, dass der mineralische Füllstoff geblähte Perlitkörner (2) umfasst, welche geblähten Perlitkörner (2) eine geschlossenzellige Oberfläche (4) aufweisen.

## Beschreibung

### GEBIET DER ERFINDUNG

Die Erfindung betrifft ein Bitumenprodukt umfassend Bitumen sowie einen mineralischen Füllstoff.

### STAND DER TECHNIK

Bitumen sind bei der schonenden Aufarbeitung von Erdölen gewonnene, dunkelfarbige, hochmolekulare Kohlenwasserstoffgemische in Form einer teerartigen Masse. Die stofflichen Eigenschaften von Bitumen erlauben eine Vielzahl von Einsatzmöglichkeiten im Bauwesen. Im Hochbau werden Bitumenprodukte beispielsweise zum Schutz von Gebäudeteilen gegen Nässe verwendet. Dabei kommen einerseits bituminöse Membranen, z.B. Bitumenpappe als Dachabdichtung, zur Verwendung. Andererseits werden zur Außenabdichtung von Gebäuden, insbesondere Kellergeschoßen, bituminöse Massen eingesetzt, die im viskosen Zustand verarbeitet werden. Typischerweise werden sie auch im Straßen- und Flughafenbau sowie im Bereich des Haus- und Wohnungsbaus, aber z.B. auch als geräuschdämmender- und beschädigungshemmender Schutzanstrich für Automobile eingesetzt.

Generell bestehen die hier interessierenden Bitumenprodukte aus einer Grundmasse aus Bitumen sowie weiteren Füll- und Zusatzstoffen. Während früher sehr oft Asbest als Füllstoff zum Einsatz kam wurde dieser aufgrund seiner kanzerogenen Eigenschaften durch andere Füllstoffe, wie beispielsweise durch geblähten Perlit, ersetzt. Unter dem Begriff geblähter Perlit wird in diesem Zusammenhang auch vulkanisches Glas und anderes Gestein verstanden, welches die Eigenschaft besitzt, durch Erhitzen mehr oder weniger stark und mehr oder weniger plötzlich zu expandieren.

Der Füllstoff wird der Grundmasse beigemengt, um die Eigenschaften des Bitumenprodukts zu verbessern. Durch die Zugabe des Füllstoffs wird die dauerhafte Stabilität - d.h. die Festigkeit, die Haltbarkeit sowie die Schrumpfungseigenschaft des Bitumenprodukts - positiv beeinflusst. Zusätzlich wird auch der Erweichungspunkt des Bitumenprodukts erhöht.

Die Verwendung von geblähtem Perlit als Füllstoff ist besonders wirtschaftlich, da dieser gut verfügbar und kostengünstig ist. Allerdings konnte geblähter Perlit bislang aufgrund seiner geringen mechanischen Belastbarkeit lediglich in gemahlener bzw. zerriebener Form in Bitumenprodukten zum Einsatz kommen. Das Zermahlen bzw. Zerreiben erfolgt dabei entweder während des Herstellungsprozesses, als Folge des Mischens mit der Grundmasse aus Bitumen und den anderen Füll- und Zusatzstoffen und somit quasi als unvermeidbare Folge des Mischens oder aber als separater Verfahrensschritt bereits vor dem Mischen. Man spricht in diesem Zusammenhang auch von "crushed perlite".

Derartige Bitumenprodukte sind beispielsweise aus der US 4168178 A und US 4168179 A bekannt.

Problematisch dabei ist, dass durch das Zerreiben bzw. Zermahlen des geblähten Perlits, die Dichte des so entstehenden Füllstoffs gegenüber dem nicht zerriebenen bzw. zermahlenen geblähten Perlit unnötig erhöht wird, wodurch das Gewicht des Bitumenproduktes ebenfalls erhöht wird.

Überdies beeinflusst der zermahlene bzw. zerriebene geblähte Perlit mit seiner irregulären Form das rheologische Verhalten des Bitumenprodukts in der Herstellung und Verarbeitung ungünstig.

### AUFGABE DER ERFINDUNG

Der vorliegenden Erfindung liegt daher die Aufgabe zugrunde, ein Bitumenprodukt zur Verfügung zu stellen, das die erwähnten Nachteile des Stands der Technik überwindet. Insbesondere soll das Bitumenprodukt ein geringes Gewicht aufweisen und dennoch ausreichende Abdichtwirkung erzielen.

### DARSTELLUNG DER ERFINDUNG

Diese Aufgabe wird bei einem Bitumenprodukt umfassend Bitumen sowie einen mineralischen Füllstoff, dadurch gelöst, dass der mineralische Füllstoff geblähte Perlitkörner umfasst, welche geblähten Perlitkörner eine geschlossenzellige Oberfläche aufweisen.

Unter geblähten Perlitkörnern mit geschlossenzelliger Oberfläche werden im erfindungsgemäßen Zusammenhang geblähte Perlitkörner verstanden, deren Oberfläche keine bzw. kaum Kanten, Stege oder Irregularitäten (insbesondere keine senkrecht zur Oberfläche stehenden Flächen) aufweist. Hierdurch verbessern sich gegenüber herkömmlichen, geblähten Perlitkörnern mit offenzelliger Oberfläche nicht nur die rheologischen Eigenschaften des erfindungsgemäßen Bitumenprodukts, sondern es sinkt auch die Dichte des Füllstoffs und somit des erfindungsgemäßen Bitumenproduktes. Weiters geht eine geschlossenzellige Oberfläche mit guten mechanischen Eigenschaften einher.

Bei den geblähten, geschlossenzelligen Perlitkörnern, welche idealerweise kugelförmig ausgebildet sind, aber auch Eiform oder Kartoffelform haben können, handelt es sich somit um eine Art von Perlithohlkörper. Die geblähten, geschlossenzelligen Perlitkörner zeichnen sich dadurch aus, dass ein Volumen oder eine Mehrzahl an Volumina idealerweise vollständig von einer Oberfläche umschlossen ist bzw. sind, wobei die Oberfläche weitgehend minimal im Verhältnis zum Volumen bzw. zur Summe der eingeschlossenen Volumina ist.

Es soll an dieser Stelle nicht unerwähnt bleiben, dass im Sinne der gegenständlichen Erfindung ein geblähtes Perlitkorn auch dann noch als geschlossenzellig angesehen wird, wenn die Oberfläche an einigen, wenigen Stellen aufgeplatzt ist. Wenn in diesem Zusammenhang vom Aufplatzen der Oberfläche gesprochen wird, so ist anzumerken, dass im Sinne der Erfindung eine Oberfläche eines geblähten Perlitkorns dann nicht als aufgeplatzt und somit geschlossenzellig angesehen wird, wenn weniger als 15%, bevorzugt weniger als 10%, besonders bevorzugt weniger als 5%, der Oberfläche der geblähten Perlitkörner aufgeplatzt ist und die restliche Oberfläche glatt ist. Dabei ist zu berücksichtigen, dass derartige "Fehler" nicht bewirken, dass sich der gesamte Perlithohlkörper füllt oder füllen kann; vielmehr ist lediglich eine unmittelbar vom "Fehler" betroffene Zelle des Perlitkorns nicht mehr intakt, die restlichen Hohlräume sind unversehrt und füllen sich nicht bzw. können sich nicht füllen.

In der Praxis kann zur Unterscheidung zwischen Perlitkörnern mit offenzelliger Oberfläche und Perlitkörnern mit geschlossenzelliger Oberfläche das Verhältnis von Partikeldichte zu Schüttdichte herangezogen werden.

Unter Partikeldichte ist hierbei die Dichte der geblähten Perlitkörner ohne ein Hohlraumvolumen zwischen den geblähten Perlitkörnern zu verstehen. Um die Partikeldichte zu bestimmen wird ein definiertes Volumen mit geblähten Perlitkörnern befüllt. Danach werden die im definierten Volumen entstandenen Hohlräume zwischen den geblähten Perlitkörnern kontrolliert mit einem Fluid, bspw. mit Helium, aufgefüllt. Um die Partikeldichte zu erhalten, wird anschließend das mit dem Fluid kontrolliert befüllte Hohlraumvolumen vom definierten Volumen abgezogen. D.h. die Partikeldichte ist das Verhältnis des Gewichts der geblähten Perlitkörner zu einem Partikelvolumen, das dem definierten Volumen abzüglich des Hohlraumvolumens entspricht.

Die Schüttdichte wiederum ist das Verhältnis des Gewichts der geblähten Perlitkörner zu dem definierten Volumen einschließlich des Hohlraumvolumens.

Bei industriell gefertigten Glashohlkugeln (Mikrosphären), die allerdings nur in einem sehr beschränkten Größen- und Dichtebereich kommerziell erhältlich sind, liegt das Verhältnis von Partikeldichte zu Schüttdichte beispielsweise bei ca. 1,5:1. Bei Perlitkörnern mit geschlossenzelliger Oberfläche liegt dieses Verhältnis bei kleiner als 2,0:1, bevorzugt bei kleiner als 1,7:1, besonders bevorzugt bei kleiner als 1,6:1. Im Vergleich dazu liegt dieses Verhältnis bei Perlitkörnern mit offenzelliger Oberfläche bei größer als 3,0:1.

Geblähte Perlitkörner mit geschlossenzelliger Oberfläche haben sich als derart stabil erwiesen, dass bei Wahl geeigneter Festigkeit bei Verarbeitung als Füllstoff in einem Bitumenprodukt deren Oberfläche weitestgehend unbeschädigt bleibt, d.h. es kommt bei der Verarbeitung in Bitumenprodukten so gut wie zu keinem Zerreiben oder Zermahlen der Oberfläche der geblähten Perlitkörner.

Darüber hinaus wird durch die Verwendung der geblähten Perlitkörner mit geschlossenzelliger Oberfläche als Füllstoff ein Volumen von Hohlräumen im erfindungsgemäßen Bitumenprodukt erzeugt bzw. erhöht, wodurch das spezifische Gewicht des erfindungsgemäßen Bitumenprodukts deutlich reduziert wird. Mit der Reduktion des Gewichts wird gleichzeitig ein hoher thermischer Dämmeffekt erzielt. Zusätzlich wird der Ausdehnungskoeffizient verringert, wodurch die Aufrechterhaltung der Abdichtfunktion bei schwankenden Außentemperaturen begünstigt wird.

Das erfindungsgemäße Bitumenprodukt kann selbstverständlich auch Zusatzstoffe enthalten, wodurch dessen Eigenschaften optimal an den jeweiligen Anwendungszweck angepasst werden können. Beispielsweise kann das erfindungsgemäße Bitumenprodukt zusätzlich Rheologieadditiva enthalten.

Es wäre vorstellbar, dass das Bitumenprodukt außerdem einen oder mehrere polymere Kunststoffe, z.B. Thermoplasten wie Polyethylen (PE), Polypropylen (PP) oder Polyvinylchlorid (PVC), umfasst, wobei die polymeren Kunststoffe eine Plastizitätsspanne vergrößern und eine Beständigkeit gegen chemische Einflüsse gewährleisten.

Es wäre außerdem vorstellbar, dass das erfindungsgemäße Bitumenprodukt einen oder mehrere elastomere Kunststoffe, wie z.B. Polyurethan (PU) oder Styrol-Butadien-Styrol (SBS), umfasst. Der Zusatz von elastomeren Kunststoffen ermöglicht, dass das erfindungsgemäße Bitumenprodukt weich und elastisch ist.

Idealerweise umfasst ein erfindungsgemäßes Bitumenprodukt ausschließlich geschlossenzellig geblähte Perlitkörner als mineralischen Füllstoff. Es ist allerdings nicht ausgeschlossen, dass das Bitumenprodukt auch noch andere Füllstoffe umfasst. In einer alternativen Ausführungsform der Erfindung ist es daher vorgesehen, dass das Bitumenprodukt auch noch einen mineralischen Füllstoff in Form von offenzellig geblähten Perlitkörnern umfasst. D.h. der mineralische Füllstoff umfasst sowohl geblähte Perlitkörner mit geschlossenzelliger Oberfläche als auch geblähte Perlitkörner mit offenzelliger Oberfläche. Dies hat den Vorteil, dass sich die geblähten Perlitkörner mit offenzelliger Oberfläche zwischen den geblähten Perlitkörnern mit geschlossenzelliger Oberfläche verhaken können, wodurch sich die geblähten Perlitkörner gegenseitig abstützen. Dadurch können die Festigkeitseigenschaften des erfindungsgemäßen Bitumenprodukts verbessert werden.

Außerdem wird hierbei immer noch ausreichend Gewicht gegenüber Bitumenprodukten mit ausschließlich offenzellig geblähten Perlitkörnern als Füllstoff eingespart, so dass nicht ausschließlich in der Herstellung aufwendigere geschlossenzellig geblähte Perlitkörner als Füllstoff zum Einsatz kommen müssen.

In einer weiteren Ausführungsform der Erfindung ist vorgesehen, dass ein Anteil an geblähten Perlitkörnern mit geschlossenzelliger Oberfläche in Gew.% größer ist als ein Anteil an geblähten Perlitkörnern mit offenzelliger Oberfläche. D.h. das erfindungsgemäße Bitumenprodukt weist einen mineralischen Füllstoff auf, der gewichtsmäßig einen höheren Anteil an geblähten Perlitkörnern mit geschlossenzelliger Oberfläche als an geblähten Perlitkörnern mit offenzelliger Oberfläche umfasst. Dadurch wird sichergestellt, dass das erfindungsgemäße Bitumenprodukt ein geringes Gewicht aufweist und kostengünstig herstellbar ist.

In einer weiteren Ausführungsvariante der Erfindung ist vorgesehen, dass die geblähten Perlitkörner mit geschlossenzelliger Oberfläche eine Schüttdichte von zwischen 90 kg/m³ und 550 kg/m³, vorzugsweise von zwischen 200 kg/m³ und 380 kg/m³, aufweisen.

Es wäre beispielsweise vorstellbar, dass die Schüttdichte der geblähten Perlitkörner mit geschlossenzelliger Oberfläche des erfindungsgemäßen Bitumenprodukts gerade so niedrig gewählt wird, sodass eine Abdichtfunktion durch den Produktionsprozess und in der späteren Anwendung gerade noch nicht beeinträchtigt wird und die dementsprechende gerade noch zulässige Gewichtsersparnis erzielt wird. Auf diese Weise kann mit einer Gewichtseinheit des erfindungsgemäßen Bitumenprodukts mehr Abdichtvolumen erzielt werden, ohne einen Kraftaufwand für einen Transport zu einem Anwendungsort zu erhöhen. Gleichzeitig wird die Traglast eines Körpers, insbesondere eines Bauwerks oder Automobils, reduziert, was leichtere Tragkonstruktionen ermöglicht. Dadurch wird der Einsatz des erfindungsgemäßen Bitumenprodukts ökonomischer.

In einer weiteren Ausführungsvariante der Erfindung ist vorgesehen, dass die geblähten Perlitkörner mit geschlossenzelliger Oberfläche eine Partikelgröße von zwischen 5 µm und 2000 µm, bevorzugt von zwischen 25 µm und 1200 µm, besonders bevorzugt von zwischen 50 µm und 600 µm, aufweisen. Unter der Partikelgröße wird ein kürzester Abstand innerhalb des Korninneren eines Perlitkorns zwischen jenen zwei Punkten der Oberfläche des Perlitkorns verstanden, welche Punkte am weitesten von einander beabstandet sind. D.h. die Partikelgröße kann unabhängig von der Oberflächenform der Perlitkörner bestimmt werden.

Eine kleinere Partikelgröße führt zu einer höheren Viskosität des erfindungsgemäßen Bitumenprodukts, da - einen konstanten Volumenanteil vorausgesetzt - die Anzahl der Perlitkörner zunimmt, wodurch sich Wechselwirkungen zwischen den Perlitkörnern erhöhen. Eine größere Partikelgröße führt wiederum zu einer geringeren Viskosität des erfindungsgemäßen Bitumenprodukts, da die Wechselwirkungen zwischen den Perlitkörnern abnehmen. D.h. die rheologischen Eigenschaften können abhängig von den gewünschten Eigenschaften des erfindungsgemäßen Bitumenprodukts durch die Partikelgröße eingestellt werden.

In einer Ausführungsvariante der Erfindung ist es vorgesehen, dass die geblähten Perlitkörner im erfindungsgemäßen Bitumenprodukt in Mengen von zwischen 1 Gew.% und 20 Gew.%, vorzugsweise in Mengen von zwischen 2 Gew.% und 12 Gew.%, vorliegen.

In einer weiteren Ausführungsvariante der Erfindung ist vorgesehen, dass das Bitumen in Mengen von zwischen 75 Gew.% und 85 Gew.% vorliegt. Eine Menge von 75 Gew.% bis 85 Gew.% ist optimal geeignet für die Aufnahme der geblähten Perlitkörner mit geschlossenzelliger Oberfläche.

Bei geeigneter Wahl der Dichte und damit der mechanischen Festigkeit der geschlossenzellig geblähten Perlitkörner kommt es bei Herstellung, Verarbeitung sowie Anwendung bzw. Gebrauch des Bitumenprodukts bei der Mehrheit der geschlossenzellig geblähten Perlitkörner so gut wie zu keinem Zerreiben oder Zermahlen der Oberfläche. Unter Mehrheit wird in diesem Zusammenhang verstanden, dass mehr als 80%, bevorzugt mehr als 90%, besonders bevorzugt mehr als 95%, der geschlossenzellig geblähten Perlitkörner unzermahlen sind. Deshalb ist in einer weiteren Ausführungsvariante der Erfindung vorgesehen, dass die geblähten Perlitkörner mit geschlossenzelliger Oberfläche unzermahlen sind.

Dadurch ist gewährleistet, dass das erfindungsgemäße Bitumenprodukt gute rheologische Eigenschaften und eine niedrige Dichte aufweist.

Die eingangs beschriebene Aufgabe wird daher auch gelöst durch ein Bitumenprodukt umfassend Bitumen sowie einem mineralischen Füllstoff umfassend geblähte Perlitkörner, wobei der mineralische Füllstoff ein gebundenes Treibmittel aufweist und durch ein Verfahren erhältlich ist, wonach die Perlitkörner
- in eine Aufgabeöffnung an einem Ende eines Ofenschachts eingebracht werden,
- in einer Förderrichtung entlang einer Wärmebehandlungsstrecke, vorzugsweise durch Schwerkraft, befördert werden,
- während des Beförderns durch die Wärmebehandlungsstrecke auf eine kritische Temperatur erhitzt werden, bei welcher die Perlitkörner plastisch werden und aufgrund des Treibmittels zu blähen beginnen;
- nach dem Erhitzen auf die kritische Temperatur auf eine zweite Temperatur oberhalb der kritischen Temperatur erhitzt werden, welche zweite Temperatur unterhalb einer dritten Temperatur liegt, bei welcher dritten Temperatur die Oberfläche der Perlitkörner aufplatzt, und wobei die zweite Temperatur in Abhängigkeit von einer gewünschten Dichte der geblähten Perlitkörner gewählt wird,
- und die geblähten Perlitkörner an einem anderen Ende des Ofenschachts ausgetragen werden.

Es hat sich herausgestellt, dass, anders als aus dem Stand der Technik bekannt und angenommen, oberhalb der kritischen Temperatur ein Temperaturbereich existiert, innerhalb dessen die Expansion der Perlitkörner durch Wahl einer zweiten Temperatur, auf welche die Perlitkörner erhitzt werden, in definierten Grenzen steuerbar ist, ohne dass es zu einem Aufplatzen der Oberfläche der geblähten Perlitkörner kommt.

Wenn in diesem Zusammenhang vom Aufplatzen der Oberfläche gesprochen wird, so ist - wie oben bereits erwähnt - anzumerken, dass im Sinne der Erfindung eine Oberfläche eines geblähten Perlitkorns dann nicht als aufgeplatzt und somit geschlossenzellig angesehen wird, wenn weniger als 15%, bevorzugt weniger als 10%, besonders bevorzugt weniger als 5%, der Oberfläche der geblähten Perlitkörner aufgeplatzt ist und die restliche Oberfläche glatt ist.

Wie sich ebenfalls herausgestellt hat, ermöglicht es die kontrollierte Expansion der Perlitkörner, die Dichte [kg/m³] bzw. einen Blähfaktor der geblähten Perlitkörner für in der Praxis relevante Anwendungsfelder einzustellen. Mit anderen Worten können durch entsprechende Wahl der zweiten Temperatur geblähte Perlitkörner mit unterschiedlichen Dichten und damit unterschiedlichen Festigkeiten hergestellt werden, die allesamt dennoch geschlossene Oberflächen aufweisen und damit das gewünschte Hohlraumvolumen einschließen.

Unter dem Begriff Blähfaktor ist das Verhältnis des Volumens der Perlitkörner vor dem Blähvorgang zu Volumen der Perlitkörner nach dem Blähvorgang zu verstehen. Je "näher" die zweite Temperatur bei der kritischen Temperatur liegt, desto "weniger" werden die Perlitkörner gebläht, d.h. umso geringer ist der Blähfaktor der Perlitkörner. Hierbei wird ein Teil des Treibmittels nicht für den Blähvorgang in Anspruch genommen, vielmehr verbleibt dieser Teil in gebundener Form in den geblähten Perlitkörnern. Bei Erhöhung der zweiten Temperatur erhöht sich auch der Blähfaktor der Perlitkörner. Je "näher" die zweite Temperatur bei der dritten Temperatur liegt, desto mehr Treibmittel steht für den Blähvorgang zur Verfügung - d.h. umso weniger Treibmittel verbleibt in den Perlitkörnern in gebundener Form.

D.h. durch die Wahl der zweiten Temperatur wird der Blähvorgang gesteuert, wodurch sich die Dichte der geblähten Perlitkörner gezielt einstellen lässt. Je niedriger die zweite Temperatur gewählt wird, desto höher ist die Dichte der geblähten Perlitkörner. Je höher die zweite Temperatur gewählt wird, desto geringer ist die Dichte der geblähten Perlitkörner. Da die mechanische Festigkeit direkt proportional zur Dichte der geschlossenzellig geblähten Perlitkörner ist, ist bei geringerer Dichte der geblähten Perlitkörner auch die mechanische Festigkeit der geblähten Perlitkörner geringer, während bei höherer Dichte der geblähten Perlitkörner die mechanische Festigkeit der geblähten Perlitkörner höher ist. Die geblähten Perlitkörner sind also vielseitig einsetzbar und können mit Hilfe des Verfahrens an den jeweiligen Anwendungsfall so angepasst werden, dass die Lösung besonders effizient ist.

Das Verfahren läuft wie folgt ab:
Die Perlitkörner werden während des Beförderns durch die Wärmebehandlungsstrecke zuerst auf die kritische Temperatur und anschließend auf die zweite Temperatur erhitzt. Ab der kritischen Temperatur werden die Perlitkörner, die jeweils ein Gefüge und eine Oberfläche aufweisen, plastisch. Mit anderen Worten werden also ab der kritischen Temperatur insbesondere das Gefüge und die Oberflächen der Perlitkörner plastisch - d.h. die Perlitkörner werden weich.

Aufgrund des Treibmittels beginnt die Mehrheit der Perlitkörner zu blähen. Unter Mehrheit wird in diesem Zusammenhang verstanden, dass mehr als 80%, bevorzugt 90%, besonders bevorzugt 95%, der aufgegebenen Perlitkörner zu blähen beginnt.

Da nicht alle aufgegebenen Perlitkörner gleiche physikalische und chemische Kenngrößen aufweisen, kann nicht gänzlich vermieden werden, dass bei einer gewissen Anzahl an Perlitkörnern die Plastifizierung und damit der Blähvorgang erst später einsetzt als bei der Mehrheit der Perlitkörner. Aus diesem Grund ist es von Vorteil, wenn die aufgegebenen Perlitkörner möglichst identische Eigenschaften aufweisen, so dass die Erwärmung der Perlitkörner bei der Durchführung des erfindungsgemäßen Verfahrens bei allen Perlitkörnern, zumindest aber bei der Mehrheit der Perlitkörner das gleiche Verhalten bewirkt.

Die zweite Temperatur liegt in einem Bereich zwischen der kritischen Temperatur und der dritten Temperatur, wobei bei der dritten Temperatur die Oberfläche der Perlitkörner aufplatzt. Im Bereich zwischen der kritischen Temperatur und der dritten Temperatur blähen die Perlitkörner weitestgehend ohne aufzuplatzen.

Das Gefüge und die Oberflächen der Perlitkörner besitzen eine temperaturabhängige Viskosität. Bei höherer Temperatur sind die Oberflächen und das Gefüge der Perlitkörner weniger viskos, weshalb die Perlitkörner durch das verdampfte Treibmittel stärker gebläht werden. Unterhalb der kritischen Temperatur ist die Viskosität so hoch, dass das Gefüge und die Oberflächen der Perlitkörner nicht plastisch werden und es zu keinem Blähvorgang kommt. Oberhalb der dritten Temperatur ist die Viskosität des Gefüges und der Oberflächen der Perlitkörner wiederum derart niedrig, andererseits der Verdampfungsdruck des Treibmittels derart hoch, dass die Oberflächen der Perlitkörner im Zuge des Blähvorgangs aufplatzen. D.h. über die Höhe der Temperatur wird die Viskosität, der Blähvorgang und in weiterer Folge die Dichte und die mechanische Festigkeit der geblähten Perlitkörner eingestellt.

Wie bereits oben ausgeführt, hat sich herausgestellt, dass durch die Höhe der zweiten Temperatur ein Blähfaktor bzw. eine Dichte des geblähten Granulats gezielt einstellbar ist und zwar derart, dass die Höhe der zweiten Temperatur umgekehrt proportional zur Dichte des geblähten Granulats ist, d.h. je niedriger die zweite Temperatur gewählt wird, desto höher ist die Dichte des geblähten Granulats und umgekehrt. Wie bereits oben geschrieben, ist die Dichte proportional zur mechanischen Festigkeit. Somit ist bei geringerer Dichte des geblähten Granulats auch die mechanische Festigkeit des geblähten Granulats geringer, während bei höherer Dichte des geblähten Granulats die mechanische Festigkeit des geblähten Granulats höher ist. Für jegliche praktische Anwendung des geblähten Granulats kann somit stets diejenige Festigkeit gewählt werden, bei der die mechanische Festigkeit gerade ausreicht.

Es wäre vorstellbar, dass bei dem Verfahren vorgesehen ist, dass die Perlitkörner nach dem Einbringen in den Ofenschacht zur Vorbereitung auf den Blähvorgang zunächst auf eine unterhalb der kritischen Temperatur liegende Vorwärmtemperatur vorgewärmt werden, vorzugsweise höchstens auf 750°C vorgewärmt werden.

Je nach Ausgangsmaterial in Form von Perlitkörnern ist es nicht erforderlich, dass im Zuge des Vorwärmens die 750°C auch tatsächlich erreicht werden. Wesentlich ist nur, dass die 750°C nicht überschritten werden, wobei auch, in Abhängigkeit der Korngröße des Ausgangsmaterials, die 750°C deutlich unterschritten werden können. So kann die Vorwärmtemperatur beispielsweise auch im Bereich zwischen 500°C und 650°C liegen.

Die Vorwärmung dient dazu, die Perlitkörner vor dem Blähvorgang bis in ein Innerstes langsam zu durchwärmen. Durch das Aufheizen auf die Vorwärmtemperatur werden alle Schichten der Perlitkörner - ausgehend von einer Oberfläche bis hin zu einem Kern - langsam und nicht schockartig erwärmt.

Es soll gewährleistet werden, dass sich durch die Vorwärmung ein möglichst einheitliches Temperaturprofil innerhalb der Schichten der Perlitkörner ausbildet. Durch Begrenzung der Vorwärmtemperatur wird verhindert, dass bei zu rascher Aufheizung auf die kritische Temperatur äußere, oberflächennahe Schichten bereits blähen und eine Isolationsschicht bilden, bevor der Kern erwärmt ist. Weiters dient die Begrenzung der Vorwärmtemperatur dazu, zu verhindern, dass das Treibmittel so großen Druck entfaltet, dass die Perlitkörner unkontrolliert expandieren, wodurch die Oberfläche aufplatzt.Mit Hilfe des Verfahrens können geschlossenzellig geblähte Perlitkörner mit gezielt eingestellter Dichte hergestellt werden, wodurch das erfindungsgemäße Bitumenprodukt optimal an unterschiedliche Fertigungsverfahren und Anwendungsfelder angepasst werden kann. Derart hergestellte geblähte Perlitkörner mit geschlossenzelliger Oberfläche weisen eine Stabilität auf, welche die weitestgehend unbeschädigte Verarbeitung als Füllstoff in einem Bitumenprodukt ermöglicht, d.h. es kommt bei der Verarbeitung in Bitumenprodukten so gut wie zu keinem Zerreiben oder Zermahlen der Oberfläche der geblähten Perlitkörner, wodurch die bereits oben beschriebene vorteilhafte Bildung von Hohlräumen im Bitumenprodukt ermöglicht wird und sich die ebenfalls bereits weiter oben beschriebenen Vorteile ergeben.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Schnittansicht eines Bitumenprodukts gemäß dem Stand der Technik,
- Fig. 2: eine schematische Schnittansicht eines erfindungsgemäßen Bitumenprodukts,
- Fig. 3: eine schematische Darstellung von geblähten Perlitkörnern mit offenzelliger Oberfläche gemäß dem Stand der Technik, und
- Fig. 4: eine schematische Darstellung von geblähten Perlitkörnern in Kugelform mit geschlossenzelliger Oberfläche.

### WEGE ZUR AUSFÜHRUNG DER ERFINDUNG

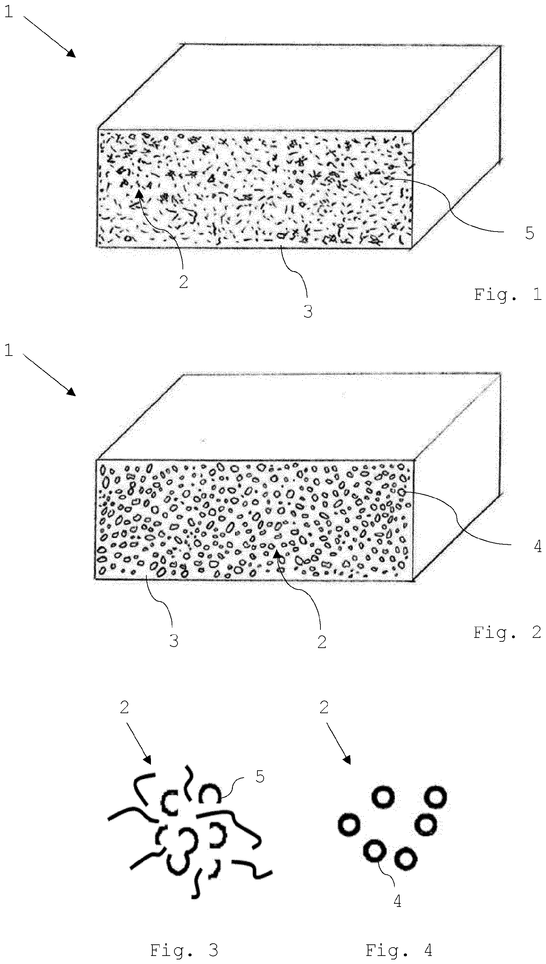

Fig. 1 zeigt einen Querschnitt durch ein Bitumenprodukt 1 gemäß dem Stand der Technik. Dabei kann es sich beispielsweise um eine Bitumenpappe oder eine bituminöse Masse handeln. Das Bitumenprodukt 1 umfasst eine Grundmasse aus Bitumen 3 sowie einen Füllstoff aus geblähten Perlitkörnern 2 mit einer offenzelligen Oberfläche 5. Weitere Füllstoffe und Zusatzstoffe, die ebenfalls im Bitumenprodukt vorhanden sein können, sind der Übersichtlichkeit wegen nicht dargestellt.

Die Perlitkörner 2 liegen aufgrund ihrer geringen mechanischen Belastbarkeit lediglich in gemahlener Form bzw. zerriebener Form vor. Das Zermahlen bzw. Zerreiben erfolgt dabei bereits während des Herstellungsprozesses des Bitumenprodukts 1, als Folge eines Mischens der Perlitkörner 2 mit dem Bitumen 3. Alternativ ist es im Stand der Technik auch üblich, den geblähten Perlit in einem separaten Verfahrensschritt vor dem Mischen zu zermahlen bzw. zerreiben, um eine bestimmte Korngröße im Bitumenprodukt zu erzielen.

Das Bitumenprodukt 1 gemäß dem Stand der Technik weist somit Perlitkörner 2 mit einer offenzelligen Oberfläche 5 oder einer gar keinen Hohlraum umschließenden Oberfläche auf, wobei das Bitumenprodukt 1 aufgrund der irregulären Form des zerriebenen bzw. zermahlenen Perlits 2 ungünstige rheologische Eigenschaften aufweist. Überdies ist das eingeschlossene Hohlraumvolumen vergleichsweise gering.

Fig. 2 zeigt einen Querschnitt durch ein erfindungsgemäßes Bitumenprodukt 1, bei dem es sich ebenfalls um eine Bitumenpappe oder eine bituminöse Masse handeln kann mit einer Grundmasse an Bitumen 3 und geblähten Perlitkörnern 2 mit geschlossenzelliger Oberfläche 4. Weitere Füllstoffe und Zusatzstoffe, die ebenfalls im Bitumenprodukt vorhanden sein können, sind der Übersichtlichkeit wegen nicht dargestellt.

Die geblähten Perlitkörner 2 mit geschlossenzelliger Oberfläche 4, die eine Schüttdichte von zwischen 90 kg/m³ und 550 kg/m³, vorzugsweise von zwischen 200 kg/m³ und 380 kg/m³, aufweisen und eine Partikelgröße von zwischen 5 µm und 2000 µm, bevorzugt von zwischen 25 µm und 1200 µm, besonders bevorzugt von zwischen 50 µm und 600 µm, besitzen, liegen in einer Menge von 1 Gew.% bis 20 Gew.%, vorzugsweise in einer Menge von 2 Gew.% bis 12 Gew.%, im erfindungsgemäßen Bitumenprodukt 1 vor, während die Menge der Bitumengrundmasse 3 im Bereich von zwischen 75 Gew.% und 85 Gew.% liegt.

Dieses Ausführungsbeispiel stellt einen Idealzustand dar, da das erfindungsgemäße Bitumenprodukt 1 ausschließlich Perlitkörner 2 mit geschlossenzelliger Oberfläche 4 als Füllstoff umfasst.

Selbstverständlich soll durch dieses Ausführungsbeispiel nicht ausgeschlossen werden, dass das erfindungsgemäße Bitumenprodukt in alternativen, nicht dargestellten Ausführungsbeispielen neben den Perlitkörnern 2 mit geschlossenzelliger Oberfläche 4 auch Perlitkörner 2 mit offenzelliger Oberfläche 5 umfasst, wobei es vorstellbar wäre, dass das erfindungsgemäße Bitumenprodukt 1 gewichtmäßig mehr geblähte Perlitkörner 2 mit geschlossenzelliger Oberfläche 4 als geblähte Perlitkörner 2 mit offenzelliger Oberfläche 5 aufweist.

Obwohl es - bei richtiger Wahl der Dichte des geschlossenzellig 4 geblähten Perlits 2 - die Stabilität und Festigkeit des geschlossenzellig 4 geblähten Perlits 2 ermöglicht, dass dieser während des Herstellungsprozesses des erfindungsgemäßen Bitumenproduktes 1 nicht zerrieben bzw. zermahlen wird, kann dies nicht gänzlich ausgeschlossen werden. Nur wenn, wenn die Mehrheit - d.h. mehr als 80%, bevorzugt mehr als 90%, besonders bevorzugt mehr als 95% - der geblähten Perlitkörner 2 unzermahlen ist, ist gewährleistet, dass das erfindungsgemäße Bitumenprodukt 1 gute rheologische Eigenschaften sowie eine niedrige Dichte aufweist.

Auf Grund der Möglichkeit, in den praxisrelevanten Grenzen, die Dichte der geschlossenzellig 4 geblähten Perlitkörner 2 gezielt einzustellen, ist in diesem Ausführungsbeispiel - je nach Fertigungsprozess und/oder vorgesehener Anwendung des erfindungsgemäßen Bitumenprodukts 1 - die Dichte der geschlossenzellig 4 geblähten Perlitkörner 2 aus ökonomischen Gründen so gewählt, dass maximal 5 Vol.% bis 10 Vol.% der geschlossenzellig 4 geblähten Perlitkörner 2 im Zuge des Herstellprozesses zerstört werden - die Wahl einer höheren Dichte der geschlossenzellig 4 geblähten Perlitkörner 2 wäre unwirtschaftlich, da die Kosten proportional zur Dichte sind.

Fig. 4 zeigt eine schematische Ansicht geblähter Perlitkörner 2 mit geschlossenzelliger Oberfläche 4 des erfindungsgemäßen Bitumenprodukts 1, welche geblähten Perlitkörner 2 keine Irregularitäten aufweisen.

Im Vergleich dazu stellt Fig. 3 eine schematische Darstellung von geblähten Perlitkörnern 2 mit offenzelliger Oberfläche 5 dar.

Das erfindungsgemäße Bitumenprodukt 1 weist zahlreiche positive Eigenschaften auf, wie beispielsweise geringeres Gewicht, bessere rheologische Eigenschaften, einen besseren Isolationseffekt, eine geringere Wärmeausdehnung und einen niedrigeren Erweichungspunkt. Als besonders wesentlich wird aber erachtet, dass die schematisch in Fig. 4 dargestellten Formen beim Herstellen des erfindungsgemäßen Bitumenproduktes 1 im Wesentlichen erhalten bleiben und die Oberflächen der geschlossenzellig 4 geblähten Perlitkörner 2 nicht aufbrechen.

### BEZUGSZEICHENLISTE

- 1: Bitumenprodukt
- 2: Perlitkörner
- 3: Bitumen
- 4: geschlossenzellige Oberfläche
- 5: offenzellige Oberfläche

## Patentansprüche

1. Bitumenprodukt (1) umfassend Bitumen (3) sowie einen mineralischen Füllstoff, **dadurch gekennzeichnet, dass** der mineralische Füllstoff geblähte Perlitkörner (2) umfasst, welche geblähten Perlitkörner (2) eine geschlossenzellige Oberfläche (4) aufweisen.

2. Bitumenprodukt (1) nach Anspruch 1, **dadurch gekennzeichnet, dass** der mineralische Füllstoff geblähte Perlitkörner (2) umfasst, welche geblähten Perlitkörner (2) eine offenzellige Oberfläche (5) aufweisen.

3. Bitumenprodukt (1) nach Anspruch 2, **dadurch gekennzeichnet, dass** ein Anteil an geblähten Perlitkörnern (2) mit geschlossenzelliger Oberfläche (4) in Gew.% größer ist als ein Anteil an geblähten Perlitkörnern (2) mit offenzelliger Oberfläche (5).

4. Bitumenprodukt (1) nach einem der vorhergehenden Ansprüche, **dadurch gekennzeichnet, dass** die geblähten Perlitkörner (2) mit geschlossenzelliger Oberfläche (4) eine Schüttdichte von zwischen 90 kg/m³ und 550 kg/m³, vorzugsweise von zwischen 200 kg/m³ und 380 kg/m³, aufweisen.

5. Bitumenprodukt (1) nach einem der vorhergehenden Ansprüche, **dadurch gekennzeichnet, dass** die geblähten Perlitkörner (2) mit geschlossenzelliger Oberfläche (4) eine Partikelgröße von zwischen 5 µm und 2000 µm, bevorzugt von zwischen 25 µm und 1200 µm, besonders bevorzugt von zwischen 50 µm und 600 µm, aufweisen.

6. Bitumenprodukt (1) nach einem der vorhergehenden Ansprüche, **dadurch gekennzeichnet, dass** die geblähten Perlitkörner (2) mit geschlossenzelliger Oberfläche (4) in Mengen von zwischen 1 Gew.% und 20 Gew.%, vorzugsweise in Mengen von zwischen 2 Gew.% und 12 Gew.%, vorliegen.

7. Bitumenprodukt (1) nach einem der vorhergehenden Ansprüche, **dadurch gekennzeichnet, dass** das Bitumen (3) in Mengen von zwischen 75 Gew.% und 85 Gew.% vorliegt.

8. Bitumenprodukt (1) nach einem der vorhergehenden Ansprüche, **dadurch gekennzeichnet, dass** die geblähten Perlitkörner (2) mit geschlossenzelliger Oberfläche (4) unzermahlen sind.

9. Bitumenprodukt (1) umfassend Bitumen (3) sowie einen mineralischen Füllstoff umfassend geblähte Perlitkörner (2), wobei der mineralische Füllstoff ein gebundenes Treibmittel aufweist und durch ein Verfahren erhältlich ist, wonach die Perlitkörner (2)
- in eine Aufgabeöffnung an einem Ende eines Ofenschachts eingebracht werden,
- in einer Förderrichtung entlang einer Wärmebehandlungsstrecke, vorzugsweise durch Schwerkraft, befördert werden,
- während des Beförderns durch die Wärmebehandlungsstrecke auf eine kritische Temperatur erhitzt werden, bei welcher die Perlitkörner (2) plastisch werden und aufgrund des Treibmittels zu blähen beginnen;
- nach dem Erhitzen auf die kritische Temperatur auf eine zweite Temperatur oberhalb der kritischen Temperatur erhitzt werden, welche zweite Temperatur unterhalb einer dritten Temperatur liegt, bei welcher dritten Temperatur die Oberfläche der Perlitkörner (2) aufplatzt, und wobei die zweite Temperatur in Abhängigkeit von einer gewünschten Dichte der geblähten Perlitkörner (2) gewählt wird,
- und die geblähten Perlitkörner (2) an einem anderen Ende des Ofenschachts ausgetragen werden.
